# FASCICULE DE BREVET EUROPEEN

(11) **EP 1 605 745 B1**
(45) Date de publication et mention de la délivrance du brevet: **22.08.2007**
(21) Numéro de dépôt: 04715346.5
(22) Date de dépôt: 27.02.2004
(51) Int. Cl.: A01B 45/00

(54) **DISPOSITIF POUR LE REMPLISSAGE DES TROUS DE CAROTTAGE D'UNE PELOUSE**
VORRICHTUNG ZUM FÜLLEN VON KERNBOHRUNGSLÖCHERN IN EINEM RASEN
DEVICE FOR FILLING CARROTING HOLES IN A LAWN

(30) Priorité: 24.03.2003 FR 0303587
(43) Date de publication de la demande: 21.12.2005
(73) Titulaire: Cuadrado, Jean-Claude, 66180 Villeneuve de la Raho (FR)
(72) Inventeur: Cuadrado, Jean-Claude, 66180 Villeneuve de la Raho (FR)
(74) Mandataire: Gosse, Michel
(86) Numéro de dépôt international: PCT/FR2004/000478
(87) Numéro de publication internationale: WO 2004/086847

(56) Documents cités:
- EP-A- 1 356 720
- NL-C- 1 007 015
- US-A- 5 018 587
- US-A- 5 477 927
- US-A- 5 535 831
- US-A- 5 833 013

## Description

### DOMAINE DE L'INVENTION

L'invention concerne un dispositif pour le remplissage, avec du sable mélangé à des fertilisants, des trous de carottage effectués dans une pelouse ; ledit dispositif étant du genre comportant une pluralité d'éléments fixes, de brosses ou de lames de caoutchouc semi-rigides, disposés sur un châssis de manière à couvrir, en continu, la totalité de la largeur de la surface sablée de travail ; lesdits éléments fixes étant disposés sur au moins deux rangées, transversales par rapport au sens d'avancement du dispositif ; ledit châssis étant fixé aux bras de relevage d'un engin roulant motorisé.

### ARRIERE PLAN TECHNOLOGIQUE

Les dispositifs connus du genre en question sont généralement de deux types :
- ceux utilisant un agencement spécifique de brosses linéaires fixes ou cylindriques rotatives, perpendiculaires ou inclinées par rapport au sens d'avancement, qui manquent d'efficacité et qui nécessitent plusieurs passages pour remplir les trous de carottage avec pour conséquence induite une usure du gazon;
- ceux utilisant un agencement de brosses montées sur des bras rotatifs qui, outre les inconvénients précédents, présentent également ceux liés aux projections de sable en dehors de la zone de travail et au manque d'homogénéité du remplissage.

Le domaine technique le plus proche est exposé dans le brevet EP1356720 qui décrit un dispositif adapté pour être couplé à un véhicule et pourvu de modules disposés sur 3 rangées et destinés à effectuer des opérations de traitement du gazon.

Chaque module comporte des éléments de brosse inclinés selon une disposition bien déterminée :
- la première rangée comporte 2 éléments centraux jointifs, en forme de « V », associés à des éléments latéraux parallèles aux éléments centraux en regard;
- la deuxième rangée ne comporte que des éléments latéraux parallèles aux éléments latéraux en correspondance de la première rangée.

Une telle disposition ne permet pas d'atteindre un taux de remplissage élevé des trous de carottage ainsi qu'une répartition régulière et uniforme du remplissage.

En effet, elle n'engendre pas de mouvement de va et vient latéral et la partie centrale demeure non balayée dès la deuxième rangée avec pour autre conséquence la formation de bourrelets longitudinaux (andains).

### RESUME DE L'INVENTION

L'invention concerne donc un dispositif qui élimine les inconvénients susmentionnés et qui se caractérise essentiellement par son efficacité en taux et rapidité de remplissage des trous de carottage du fait du déplacement oblique de va et vient qu'il procure au sable en cours de fonctionnement et ce, sur toute la largeur du dispositif.

Le dispositif selon l'invention se caractérise essentiellement en ce que :
a) la première rangée comporte deux éléments centraux jointifs, disposés en forme de « V », adaptés pour déplacer obliquement le sable situé sur leur trajectoire dans la direction des extrémités libres desdits éléments centraux et au moins deux premiers éléments latéraux distincts disposés de chaque côté desdits éléments centraux et adaptés pour, d'une part, récupérer et déplacer obliquement, en sens inverse, la partie de sable préalablement déplacée par lesdits éléments centraux et non déversée dans les trous de carottage situés sur le passage desdits éléments latéraux, et, d'autre part, déplacer obliquement, dans ledit sens, le sable situé sur la partie de la trajectoire comprise entre les extrémités libres desdits éléments centraux et les extrémités extérieures desdits éléments latéraux ;
b) la deuxième rangée, comporte deux éléments centraux jointifs, disposés en forme de « V », adaptés pour récupérer et déplacer obliquement, dans la direction des extrémités libres desdits éléments, autrement dit dans le sens inverse de celui résultant de l'action des éléments latéraux de la première rangée, la partie de sable non déversée dans les trous de carottage situés sur le passage desdits éléments.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins:

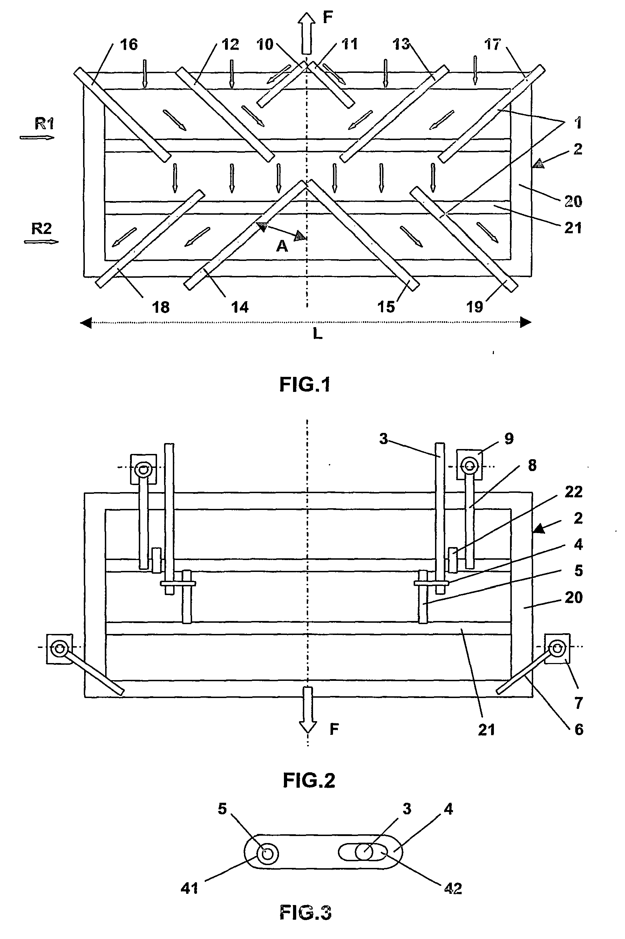

- la figure 1 est une vue de dessous du dispositif selon l'invention ne représentant que les éléments de brosses ou de lames;
- la figure 2 est une vue de dessus dudit dispositif ne représentant que les moyens de liaison du châssis aux bras de relevage et les moyens de roulement dudit châssis.
- la figure 3 est une vue de profil de la biellette articulée.

### DESCRIPTION DETAILLEE DE L'INVENTION

Le dispositif représenté aux figures est destiné au remplissage, avec du sable mélangé à des fertilisants, des trous de carottage effectués dans une pelouse.

Il est du genre comportant une pluralité d'éléments fixes (1), de brosses ou de lames de caoutchouc semi-rigides, disposés sur un châssis (2) de manière à couvrir, en continu, la totalité de la largeur (L) de la surface sablée de travail ; lesdits éléments fixes (1) étant disposés sur deux rangées (R1) et (R2), transversales par rapport au sens d'avancement (F) du dispositif ; ledit châssis étant fixé aux bras de relevage (3) d'un engin roulant motorisé.

Selon les caractéristiques de base de l'invention:
a) la première rangée (R1) comporte deux éléments centraux jointifs (10) et (11), disposés en forme de « V », adaptés pour déplacer obliquement le sable situé sur leur trajectoire dans la direction des extrémités libres desdits éléments centraux et au moins deux premiers éléments latéraux distincts (12) et (13) disposés de chaque côté desdits éléments centraux (10,11) et adaptés pour, d'une part, récupérer et déplacer obliquement, en sens inverse, la partie de sable préalablement déplacée par lesdits éléments centraux et non déversée dans les trous de carottage situés sur le passage desdits éléments latéraux, et, d'autre part, déplacer obliquement, dans ledit sens, le sable situé sur la partie de la trajectoire comprise entre les extrémités libres desdits éléments centraux (10,11) et les extrémités extérieures desdits éléments latéraux (12,13) ;
b) la deuxième rangée (R2), comporte deux éléments centraux jointifs (14) et (15), disposés en forme de « V », adaptés pour récupérer et déplacer obliquement, dans la direction des extrémités libres desdits éléments, autrement dit dans le sens inverse de celui résultant de l'action des éléments latéraux (12,13) de la première rangée (R1), la partie de sable non déversée dans les trous de carottage situés sur le passage desdits éléments.

Les éléments centraux en forme de « V », pointe en avant, permettent, en outre, un auto centrage du dispositif au cours de son déplacement.

Selon des caractéristiques additionnelles de l'invention :
- la première rangée (R1) peut comporter deux éléments latéraux distincts additionnels (16,17) disposés de chaque côté des éléments latéraux (12,13) et adaptés pour déplacer obliquement, dans ledit sens, le sable situé sur la partie de la trajectoire comprise entre les extrémités extérieures des éléments latéraux (12,13) et les extrémités extérieures des éléments latéraux (16,17) ;
- la deuxième rangée (R2) peut comporter deux éléments latéraux distincts additionnels (18,19) disposés de chaque côté des éléments centraux (14,15) et adaptés pour récupérer et déplacer obliquement, dans le sens inverse, la partie de sable préalablement déplacée par les éléments latéraux (16,17) et non déversée dans les trous de carottage situés sur le passage desdits éléments.

Les rangées (R1) et (R2) pourraient comporter des éléments jointifs en forme de « V » disposés dans le même sens que les éléments centraux (10,11) et (14,15) et des éléments latéraux disposés dans le même sens que les éléments latéraux (12,13) et (18,19) voire dans des sens opposés.

Selon la réalisation préférée de l'invention, tous les éléments (1) forment, avec l'axe
(A) du châssis (2), un angle de 45° et sont symétriques par rapport audit axe.

Selon des particularités de réalisation de l'invention :
- le châssis (2) est relié à chaque bras de relevage (3) au moyen d'une biellette (4) pourvue, côté châssis, d'une rotule percée (41) traversée par un axe (5) solidaire de traverses (21) appartenant au cadre (20) dudit châssis, et, côté bras de relevage, d'une ouverture longitudinale (42) apte à permettre le déplacement longitudinal de l'extrémité dudit bras de relevage afin de compenser les écarts de mouvement de la machine et maintenir les brosses toujours plaquées au sol sans perte d'adhérence ;
- le châssis (2) comporte, latéralement, à l'avant, à l'extérieur de la zone de travail (L), des roues (7) solidaires de bras de déport (6) ;
- le châssis (2) comporte, à l'arrière, des roues (9) solidaires de bras de soutien (8) ;
- les roues (7) et (9) sont pivotantes par rapport à leur axe support et sont réglables en hauteur par rapport au châssis afin de régler la hauteur de travail des éléments (1).

Le châssis (2) comporte également :
- sur le dessus, des barres cintrées (22) adaptées pour coïncider avec les butées anti-ballant de l'engin tracteur ;
- à l'arrière, deux chaînes qui s'accrochent sur chaque bras de relevage dans le but de stabiliser le dispositif.

Les extrémités des brosses, ou lames, sont positionnées avec un léger recouvrement.

Selon une réalisation avantageuse de l'invention, le châssis (2) est fixé aux bras de relevage d'une tondeuse à gazon standard du commerce au lieu et place du châssis porteur des outils de coupe.

La disposition des brosses induisant un mouvement de va et vient peut être également utilisée pour relever les brins de gazon qui ont été couchés par les passages successifs des machines à rouleaux.

Bien entendu, l'invention n'est pas limitée aux modes de réalisation décrits et représentés pour lesquels on pourra prévoir d'autres variantes dans :
- le nombre, les formes et la disposition des brosses ou des lames
- le type d'engin porteur du châssis du dispositif ;
et l'étendre à d'autres applications.

## Revendications

1. Dispositif pour le remplissage, avec du sable mélangé à des fertilisants, des trous de carottage effectués dans une pelouse, du genre comportant une pluralité d'éléments fixes (1), de brosses ou de lames de caoutchouc semi-rigides, disposés sur un châssis (2) de manière à couvrir, en continu, la totalité de la largeur (L) de la surface sablée de travail ; lesdits éléments fixes (1) étant disposés sur deux rangées (R1) et (R2), transversales par rapport au sens d'avancement (F) du dispositif ; ledit châssis étant fixé aux bras de relevage (3) d'un engin roulant motorisé;
**caractérisé en ce que** :
a) la première rangée (R1) comporte deux éléments centraux jointifs (10) et (11), disposés en forme de « V », adaptés pour déplacer obliquement le sable situé sur leur trajectoire dans la direction des extrémités libres desdits éléments centraux et au moins deux premiers éléments latéraux distincts (12) et (13) disposés de chaque côté desdits éléments centraux (10,11) et adaptés pour, d'une part, récupérer et déplacer obliquement, en sens inverse, la partie de sable préalablement déplacée par lesdits éléments centraux et non déversée dans les trous de carottage situés sur le passage desdits éléments latéraux, et, d'autre part, déplacer obliquement, dans ledit sens, le sable situé sur la partie de la trajectoire comprise entre les extrémités libres desdits éléments centraux (10,11) et les extrémités extérieures desdits éléments latéraux (12,13) ;
b) la deuxième rangée (R2), comporte deux éléments centraux jointifs (14) et (15), disposés en forme de « V », adaptés pour récupérer et déplacer obliquement, dans la direction des extrémités libres desdits éléments, autrement dit dans le sens inverse de celui résultant de l'action des éléments latéraux (12,13) de la première rangée (R1), la partie de sable non déversée dans les trous de carottage situés sur le passage desdits éléments.

2. Dispositif, selon la revendication 1, **caractérisé en ce que** la première rangée (R1) comporte deux éléments latéraux additionnels (16,17) disposés de chaque côté des premiers éléments latéraux (12,13) et adaptés pour déplacer obliquement, dans ledit sens, le sable situé sur la partie de la trajectoire comprise entre les extrémités extérieures des premiers éléments latéraux (12,13) et les extrémités extérieures des éléments latéraux additionnels (16,17).

3. Dispositif, selon la revendication 1, **caractérisé en ce que** la deuxième rangée (R2) comporte deux éléments latéraux additionnels (18,19) disposés de chaque côté des éléments centraux (14,15) correspondants et adaptés pour récupérer et déplacer obliquement, dans le sens inverse, la partie de sable préalablement déplacée par les éléments latéraux additionnels (16,17) et non déversée dans les trous de carottage situés sur le passage desdits éléments.

4. Dispositif, selon l'une quelconque des revendications précédentes, **caractérisé en ce que** tous les éléments (1) forment, avec l'axe (A) du châssis (2), un angle de 45° et sont symétriques par rapport audit axe.

5. Dispositif, selon l'une quelconque des revendications précédentes, **caractérisé en ce que** le châssis (2) est relié à chaque bras de relevage (3) au moyen d'une biellette (4) pourvue, côté châssis, d'une rotule percée (41) traversée par un axe (5) solidaire de traverses (21) appartenant au cadre (20) dudit châssis, et, côté bras de relevage (3), d'une ouverture longitudinale (42) apte à permettre le déplacement longitudinal de l'extrémité dudit bras de relevage.

6. Dispositif, selon l'une quelconque des revendications précédentes, **caractérisé en ce que** le châssis (2) comporte, latéralement, à l'avant, à l'extérieur de la zone de travail (L), des roues (7) solidaires de bras de déport (6).

7. Dispositif, selon l'une quelconque des revendications précédentes, **caractérisé en ce que** le châssis (2) comporte, à l'arrière, des roues (9) solidaires de bras de soutien (8).

8. Dispositif, selon les revendications 6 et 7, **caractérisé en ce que** les roues (7) et (9) sont réglables en hauteur par rapport au châssis.

9. Dispositif, selon l'une quelconque des revendications précédentes, **caractérisé en ce que** le châssis (2) est fixé aux bras de relevage d'une tondeuse à gazon au lieu et place du châssis porteur des outils de coupe.

## Claims

1. Device for the filling, with sand mixed with fertilisers, of boring holes produced in a lawn, of the type comprising a plurality of fixed parts (1), brushes or semi-rigid rubber blades (2) so as to cover, continuously, the entire width (L) of the sanded working surface; said fixed parts (1) being arranged on two rows (R1) and (R2), crosswise with respect to the direction of forward movement (F) of the device; said chassis being attached to the lifting arm (3) of a motorised moving machine;
**characterised in that**:
a) the first row (R1) comprises two joined central parts (10) and (11), arranged in a "V" shape, suitable for moving the sand located on their path, obliquely in the direction of the free ends of said central parts and at least two first separate side parts (12) and (13) arranged on either side of said central parts (10,11) and suitable for, firstly, retrieving and moving obliquely, in the opposite direction, the portion of sand previously moved by said central parts and not diverted into the boring holes located in the path of said side parts, and, secondly, moving obliquely, in said direction, the sand located on the part of the path between the free ends of said central parts (10,11) and the external ends of said side parts (12,13);
b) the second row (R2), comprises two joined central parts (14) and (15), arranged in a "V" shape, suitable for retrieving and moving obliquely, in the direction of the free ends of said parts, in other words, in the opposite direction of that resulting from the action of the side parts (12, 13) of the first row (R1), the portion of sand not diverted into the boring holes located on the passage of said parts.

2. Device according to claim 1, **characterised in that** the first row (R1) comprises two additional side parts (16, 17) arranged at each end of the first side parts (12, 13) and suitable for moving obliquely, in said direction, the sand located on the part of the path between the external ends of the first side parts (12, 13) and the external ends of the additional side parts (16, 17).

3. Device, according to claim 1, **characterised in that** the second row (R2) comprises two additional side parts (18, 19) arranged at each end of the corresponding central parts (14, 15) and suitable for retrieving and moving obliquely, in the opposite direction, the portion of sand previously moved by the additional side parts (16, 17) and not diverted into the boring holes located in the path of said parts.

4. Device, according to any of the above claims, **characterised in that** all the parts (1) form, with the axis (A) of the chassis (2), a 45° angle and are symmetric with respect to said axis.

5. Device, according to any of the above claims, **characterised in that** the chassis (2) is connected to each lifting arm (3) by means of a connecting rod (4) equipped, on the chassis side, with a bored ball joint (41) wherein a shaft (5) attached to crosspieces (21) belong to the frame (20) of said chassis passes through, and, at the lifting arm side (3), with a longitudinal opening (42) capable of enabling the longitudinal movement of the end of said lifting arm.

6. Device, according to any of the above claims, **characterised in that** the chassis (2) comprises, laterally, at the front, outside the working zone (L), wheels (7) attached to offset arms (6).

7. Device, according any of the above claims, **characterised in that** the chassis (2) comprises, at the rear, wheels (9) attached to support arms (8).

8. Device, according to claims 6 and 7, **characterised in that** the wheels (7) and (9) are adjustable in terms of height with respect to the chassis.

9. Device, according to any of the above claims, **characterised in that** the chassis (2) is attached to the lifting arms of a lawnmower instead of the chassis comprising cutting tools.

## Patentansprüche

1. Vorrichtung zum Befüllen von Aerifizierlöchern eines Rasens mit Sand, vermischt mit Dünger, wobei sie von der Art ist, die mehrere festsitzende Elemente (1), Bürsten oder Lamellen aus halbstarrem Gummi umfasst, die auf einem Rahmen (2) so angeordnet sind, dass sie die gesamte Breite (L) der mit Sand bestreuten Arbeitsfläche durchgehend abdecken; wobei die besagten festsitzenden Elemente (1) in zwei Reihen (R1) und (R2) angeordnet sind, weiche quer zur Fahrtrichtung (F) der Vorrichtung liegen; wobei der besagte Rahmen mit den Hebearmen (3) an eine fahrende, motorisierte Maschine angekoppelt wird;
**dadurch gekennzeichnet, dass**:
a) die erste Reihe (R1) zwei aneinander gesetzte, mittige Elemente (10) und (11) umfasst, welche V-förmig angeordnet und so angepasst sind, dass sie den auf ihrer Laufbahn befindlichen Sand schräg in Richtung der freien Enden der besagten mittigen Elemente ableiten; und zumindest zwei erste, separate Seitenelemente (12) und (13), die auf jeder Seite der besagten mittigen Elemente (10,11) angeordnet und so angepasst sind, dass sie einerseits die Menge Sand, die von den besagten mittigen Elementen zuvor abgeleitet und nicht in die Aerifizierlöcher, welche von den besagten Seitenelementen passiert werden, gefüllt wurde, aufnehmen und in die Gegenrichtung schräg ableiten, und andererseits den Sand, welcher sich auf dem Streckenabschnitt zwischen den freien Enden der besagten mittigen Elemente (10,11) und den äußeren Enden der besagten Seitenelemente (12,13) befindet, schräg in die besagte Richtung ableiten;
b) die zweite Reihe (R2) zwei aneinander gesetzte, mittige Elemente (14) und (15) umfasst, welche V-förmig angeordnet und so angepasst sind, dass sie die Menge Sand, welche nicht in die Aerifizierlöcher, die von den besagten Elementen passiert werden, gefüllt wurde, aufnehmen und schräg in Richtung der freien Enden der besagten Elemente, anders ausgedrückt, in die Gegenrichtung jener Richtung, die aus der Tätigkeit der Seitenelemente (12,13) der ersten Reihe (R1) resultiert, ableiten.

2. Vorrichtung nach Anspruch 1, **dadurch gekennzeichnet, dass** die erste Reihe (R1) zwei zusätzliche Seitenelemente (16,17) umfasst, die auf jeder Seite der ersten Seitenelemente (12,13) angeordnet und so angepasst sind, dass sie den Sand, welcher sich auf dem Streckenabschnitt zwischen den äußeren Enden der ersten Seitenelemente (12,13) und den äußeren Enden der zusätzlichen Seitenelemente (16,17) befindet, schräg in die besagte Richtung ableiten.

3. Vorrichtung nach Anspruch 1, **dadurch gekennzeichnet, dass** die zweite Reihe (R2) zwei zusätzliche Seitenelemente (18,19) umfasst, die auf jeder Seite der entsprechenden mittigen Elemente (14,15) angeordnet und so angepasst sind, dass sie die Menge Sand, die von den zusätzlichen Seitenelementen (16,17) zuvor abgeleitet und nicht in die Aerifizierlöcher, welche von den besagten Elementen passiert werden, gefüllt wurde, aufnehmen und in die Gegenrichtung schräg ableiten.

4. Vorrichtung nach einem der vorhergehenden Ansprüche, **dadurch gekennzeichnet, dass** alle Elemente (1) zur Achse (A) des Rahmens (2) einen 45°-Winkel bilden und in Bezug auf die besagte Achse symmetrisch sind.

5. Vorrichtung nach einem der vorhergehenden Ansprüche, **dadurch gekennzeichnet, dass** der Rahmen (2) mittels einer Verbindungsstange (4), welche rahmenseitig mit einem gebohrten Gelenkauge (41), das von einer mit den Querstäben (21) des Gestells (20) des besagten Rahmens verbundenen Achse (5) durchquert wird, und hebearmseitig (3) mit einer Längsöffnung (42) versehen ist, die imstande ist, ein längliches Verschieben des Endes des besagten Hebearms zu ermöglichen.

6. Vorrichtung nach einem der vorhergehenden Ansprüche, **dadurch gekennzeichnet, dass** der Rahmen (2) vorne seitlich, außerhalb der Arbeitsfläche (L), Räder (7) aufweist, die mit den Verlagerungsarmen (6) verbunden sind.

7. Vorrichtung nach einem der vorhergehenden Ansprüche, **dadurch gekennzeichnet, dass** der Rahmen (2) hinten Räder (9) aufweist, die mit den Stützarmen (8) verbunden sind.

8. Vorrichtung nach den Ansprüchen 6 und 7, **dadurch gekennzeichnet, dass** die Räder (7) und (9) im Verhältnis zum Rahmen höhenverstellbar sind.

9. Vorrichtung nach einem der vorhergehenden Ansprüche, **dadurch gekennzeichnet, dass** der Rahmen (2) mit den Hebearmen an einem Rasenmäher anstelle des Tragrahmens der Schneidwerkzeuge befestigt wird.
